# DEMANDE DE BREVET EUROPEEN

(11) **EP 4 095 811 A1**
(43) Date de publication de la demande: **30.11.2022**
(21) Numéro de dépôt: 22174405.5
(22) Date de dépôt: 19.05.2022
(51) Int. Cl.: G06V 20/52, G06V 40/10, G06V 10/82

(54) **PROCÉDÉ ET SYSTÈME DE DÉTECTION DE PERSONNE(S) DANS UN LIEU, ET VÉHICULE METTANT EN OEUVRE UN TEL SYSTÈME**

(30) Priorité: 26.05.2021 FR 2105462
(71) Demandeur: SNCF Voyageurs, 93200 Saint-Denis (FR)
(72) Inventeur: AFANOU, Sitou, 72000 LE MANS (FR)
(74) Mandataire: IPAZ

(57) **Abrégé**

L'invention concerne un procédé (100) de détection de personne(s) dans un lieu comprenant au moins une surface, dite perturbatrice, susceptible de fausser ladite détection et causer un faux-positif lors de ladite détection, ledit procédé (100) comprenant au moins une itération d'une phase (102), dite de détection, comprenant les étapes suivantes :
- captation (104) d'une image au sein dudit lieu par au moins une caméra ;
- détection (106,108) au sein de ladite image captée :
•d'au moins une zone comprenant une personne, et
•d'au moins une zone comprenant une surface perturbatrice ;

caractérisé en ce que ladite phase de détection (102) comprend en outre, pour au moins une zone associée à une personne, une étape (114) pour déterminer si ladite personne est une personne réelle se trouvant dans ledit lieu (404) ou à l'extérieur dudit lieu, en fonction d'un chevauchement de ladite zone associée à ladite personne avec au moins une zone associée à une surface perturbatrice.

Elle concerne également un système de détection de personne dans un lieu comprenant au moins une surface perturbatrice et un véhicule de transport en commun équipé dudit système.

## Description

La présente invention concerne un procédé de détection de personne(s) dans un lieu. Elle concerne également un système de détection de personne(s) dans un lieu, et un véhicule de transport en commun équipé d'un tel système de détection.

Le domaine de l'invention est le domaine de la détection de personnes dans un lieu, en particulier dans un lieu fermé, et encore plus particulièrement dans un habitacle ou une zone passager d'un véhicule, par exemple dans un véhicule de transport en commun tel qu'un train.

### État de la technique

On connait de nombreux moyens de détection de présence de personnes dans un lieu, public ou privé.

Pour détecter des personnes dans un lieu, il est connu d'utiliser des systèmes intelligents d'analyse d'images captées au sein dudit lieu.

Cependant, ces systèmes intelligents d'analyse d'images ne sont pas dénués de limitations. En effet, les performances de détection de personnes par des systèmes intelligents sont limitées par la qualité et le contenu des images à analyser.

De plus, les systèmes intelligents d'analyse d'images actuels ne sont pas capables d'interpréter et de différencier dans une image une personne se trouvant dans le lieu d'une personne se trouvant hors dudit lieu, tel qu'une personne visible au travers d'une fenêtre par exemple.

Or, il est commun pour des personnes de se trouver à proximité d'un lieu nécessitant une détection de personnes au sein du lieu, telles que des voyageurs se trouvant à proximité d'un habitacle ou une zone passager d'un véhicule à l'arrêt ou des personnes se trouvant à l'extérieur d'un commerce ou d'un lieu public. Par exemple, dans de nombreuses applications, il est important de discriminer des personnes se trouvant dans une pièce et celles se trouvant juste derrière une vitre de cette même pièce.

Par ailleurs, les systèmes actuels sont incapables de différencier une personne réelle d'une personne illustrée ou affichée sur un support publicitaire.

Ainsi les systèmes actuels sont enclins à générer de nombreux faux positifs.

Un but de la présente invention est de remédier à au moins un des inconvénients précités.

Un autre but de la présente invention est de proposer une solution plus fiable de détection de personnes dans un lieu.

Un autre but de la présente invention est de proposer une solution permettant de détecter des personnes dans un lieu tout en étant capable de discriminer des personnes se trouvant dans ledit lieu de celles se trouvant hors dudit lieu.

### Exposé de l'invention

L'invention permet d'atteindre au moins l'un de ces buts par un procédé de détection de personne(s) dans un lieu comprenant au moins une surface, dite perturbatrice, susceptible de fausser ladite détection et causer un faux-positif lors de ladite détection, ledit procédé comprenant au moins une itération d'une phase, dite de détection, comprenant les étapes suivantes :
- captation d'une image au sein dudit lieu par au moins une caméra ;
- détection au sein de ladite image captée :
   - d'au moins une zone comprenant une personne, et
   - d'au moins une zone comprenant une surface perturbatrice ;
caractérisé en ce que ladite phase de détection comprend en outre, pour au moins une zone associée à une personne, une étape pour déterminer si ladite personne est une personne réelle se trouvant dans ledit lieu, en fonction d'un chevauchement de ladite zone associée à ladite personne avec au moins une zone associée à une surface perturbatrice.

L'invention propose ainsi de déterminer si une personne réelle est présente au sein d'un lieu à partir d'une image captée dans ledit lieu et en fonction d'au moins une zone associée à une personne et d'au moins une zone associée à une surface perturbatrice identifiées dans ladite image.

Ainsi, il est par exemple possible de déterminer qu'une personne réelle est à l'intérieur dudit lieu si la zone associée à ladite personne réelle ne chevauche pas avec une zone associée à une surface perturbatrice. En effet, dans une image captée au sein d'un lieu, si une zone comprenant une personne est distincte d'une zone comprenant une surface perturbatrice, ladite personne se trouve *a fortiori* à l'intérieur dudit lieu.

De plus, selon un autre exemple, une personne peut être déterminée comme à l'intérieur dudit lieu si la zone associée à ladite personne chevauche partiellement une zone associée à une surface perturbatrice.

En effet, dans une image captée dans un lieu, lorsqu'une personne est dans l'alignement de la caméra avec une surface perturbatrice telle qu'une vitre ou une fenêtre, la zone détectée associée à ladite personne chevauche :
- intégralement la zone comprenant ladite surface perturbatrice lorsque la personne est à l'extérieur dudit lieu, ou
- partiellement la zone comprenant ladite surface perturbatrice lorsque la personne est à l'intérieur dudit lieu.

Par conséquent, le procédé de détection selon l'invention propose une solution permettant de détecter des personnes dans un lieu tout en étant capable de discriminer des personnes se trouvant dans ledit lieu de celles se trouvant hors dudit lieu. Ainsi, le procédé est plus fiable et moins enclin à générer un faux positif lié à la présence d'une personne à l'extérieur du lieu mais visible au travers d'une surface translucide ou transparente.

Par ailleurs, le procédé selon l'invention permet en outre de discriminer des personnes réelles de personnes, dites factices, illustrées sur un support publicitaire, tel qu'un écran ou une affiche, présent dans ledit lieu. En effet, une personne factice étant *a fortiori* comprise intégralement dans une surface publicitaire, une zone associée à ladite personne factice chevauche forcement intégralement avec une zone associée à la surface perturbatrice qu'est la surface publicitaire. Par conséquent, le procédé selon l'invention est plus fiable et moins enclin à générer un faux positif lié à la présence d'une surface perturbatrice de type surface publicitaire.

A titre d'exemples nullement limitatif, une surface perturbatrice susceptible de fausser la détection par un faux positif peut être :
- une surface translucide, tel qu'une fenêtre ou une porte,
- une surface transparente, tel qu'une fenêtre ou une porte,
- une surface publicitaire, tel qu'un écran ou une affiche,
- etc.

Avantageusement, une personne peut être considérée comme une personne réelle se trouvant dans ledit lieu, lorsque la zone associée à ladite personne ne chevauche pas complètement avec aucune zone associée à une surface perturbatrice.

Ainsi, chaque zone détectée associée à une surface perturbatrice est prise en compte pour déterminer si une personne réelle se trouve dans ledit lieu. Par conséquent, le procédé permet de discriminer de manière plus précise et plus fiable des personnes réelles se trouvant dans ledit lieu de celles se trouvant hors dudit lieu et des personnes factices.

Avantageusement, la phase de détection peut en outre comprendre une étape de détection d'au moins une zone comprenant un objet occulteur dans ladite au moins une image captée.

Ainsi, une personne peut être déterminée comme se trouvant dans ledit lieu, lorsque :
- la zone associée à ladite personne chevauche complètement avec une zone associée à une surface perturbatrice ; et
- une zone associée à un objet occulteur chevauche partiellement avec ladite zone associée à une surface perturbatrice.

Par conséquent, le procédé selon l'invention est capable de déterminer la présence d'une personne réelle au sein d'un lieu même lorsqu'un objet occulteur se trouve entre ladite personne et la caméra.

A titre d'exemples nullement limitatifs, un objet occulteur susceptible d'être positionné entre une personne et un moyen de captation peut être :
- du mobilier, tel qu'une table, une chaise ou un banc,
- un objet appartenant à la personne, telle qu'une valise, un sac ou du matériel sportif,
- des éléments de décoration, tel qu'une plante ou une statue,
- etc.

Avantageusement, au moins une desdites zones détectées peut être définie par une boite rectangulaire.

Ainsi, quelle que soit la forme de l'élément à laquelle elle est associée, au moins une desdites zones détectées est définie par une boite rectangulaire.

Par conséquent, la délimitation d'une zone associée à un élément lors d'une étape de détection est simplifiée et peut être réalisée plus rapidement en utilisant moins de ressources.

De plus, la détection d'un éventuel chevauchement d'une zone définie par une boite rectangulaire avec une autre zone est facilitée et peut être réalisée plus rapidement en utilisant moins de ressources.

Avantageusement, au moins une desdites zones détectées peut être définie par le contour de l'élément auquel elle est associée.

Ainsi, au moins une desdites zones détectées est définie de manière plus précise.

Par conséquent, il est possible de discriminer des personnes se trouvant dans ledit lieu des autres personnes détectées de manière plus précise.

Avantageusement, au moins une étape de détection de zone peut être mise en œuvre par un réseau neuronal préalablement entrainé pour ladite détection, en particulier à l'aide d'images captées dans ledit lieu.

Ainsi, il est possible d'améliorer davantage la qualité de détection de zone, en particulier lorsque le réseau neuronal est entrainé spécifiquement à partir d'images captées au sein dudit lieu.

L'entrainement du réseau neuronal peut être réalisé par fourniture audit réseau neuronal d'une pluralité d'images dudit lieu et en indiquant si, et où, se trouve ladite zone le cas échéant.

Selon un autre aspect de l'invention il est proposé un système de détection de personne(s) dans un lieu comprenant au moins une surface, dite perturbatrice, susceptible de fausser ladite détection et causer un faux-positif lors de ladite détection, ledit système comprenant :
- au moins une caméra pour capter au moins une image au sein dudit lieu ;
- au moins une unité d'analyse configurée pour analyser au moins une image captée par ladite caméra pour détecter dans ladite image :
   - au moins une zone comprenant une personne,
   - au moins une zone comprenant une surface perturbatrice ; et
caractérisé en ce que ladite unité d'analyse est configurée pour déterminer, pour chaque zone associée à une personne, si ladite personne est une personne réelle se trouvant au sein dudit lieu en fonction d'un chevauchement de ladite zone associée à ladite personne avec au moins une zone associée à une surface perturbatrice.

Ainsi, le système de détection de personne dans un lieu comprenant au moins une surface perturbatrice est configuré pour mettre en œuvre chacune des étapes d'un procédé selon l'invention décrit précédemment.

Avantageusement, au moins une unité d'analyse comprend un réseau neuronal préalablement entrainé pour la détection d'au moins une desdites zones, en particulier à l'aide d'images captées dans ledit lieu.

Plus particulièrement, ledit réseau neuronal peut mettre en œuvre au moins un algorithme profond parmi YOLO, RCNN, Faster RCNN, Mask RCNN et VGG, pour lequel, lors d'une phase d'apprentissage, on donne en données d'entrée des images accompagnées de données précisant si une zone comprenant une personne, une surface perturbatrice ou un objet occulteur est présente ou non dans chacune desdites images.

Ainsi, une fois le réseau neuronal entrainé, lorsqu'une image est donnée en entrée, le réseau neuronal est capable de fournir en sortie une donnée indiquant si une zone comprenant une personne, une surface perturbatrice ou un objet occulteur a été détectée ou non dans ladite image.

Selon encore un autre aspect de l'invention, il est proposé un véhicule de transport en commun, en particulier véhicule ferroviaire, équipé d'un système selon l'invention, pour la détection de personne(s) dans une zone passager ou un habitacle dudit véhicule.

Avantageusement, le véhicule peut être :
- un wagon, équipé d'un système selon l'invention pour la détection de personne à l'intérieur dudit le wagon,
- une locomotive, équipée d'un système selon l'invention pour la détection de personne à l'intérieur d'une zone conducteur,
- un train,
- un tramway,
- etc.

### Description des figures et modes de réalisation

D'autres avantages et caractéristiques apparaîtront à l'examen de la description détaillée d'un mode de réalisation nullement limitatif, et des dessins annexés sur lesquels :
- la FIGURE 1 est une représentation schématique d'un exemple de réalisation non limitatif d'un procédé selon l'invention ;
- la FIGURE 2 est une représentation schématique d'un exemple de réalisation non limitative d'une étape pour déterminer si la personne est considérée comme réelle et dans ledit lieu d'un procédé selon l'invention ;
- la FIGURE 3 est une représentation schématique d'un exemple de réalisation non limitatif d'un système selon l'invention ;
- la FIGURE 4 est une représentation schématique d'un exemple de réalisation non limitatif d'un véhicule selon l'invention équipé d'un système selon l'invention ;
- la FIGURE 5a et la FIGURE 5b sont des représentations schématiques d'exemples non limitatifs de zones détectées dans une image captée au sein d'un lieu lors de la mise en œuvre d'un procédé selon l'invention ; et
- la FIGURE 6 est une autre représentation schématique d'un exemple non limitatif de zones détectées dans une image captée au sein d'un lieu lors de la mise en œuvre d'un procédé selon l'invention.

Il est bien entendu que les modes de réalisation qui seront décrits dans la suite ne sont nullement limitatifs. On pourra notamment imaginer des variantes de l'invention ne comprenant qu'une sélection de caractéristiques décrites par la suite isolées des autres caractéristiques décrites, si cette sélection de caractéristiques est suffisante pour conférer un avantage technique ou pour différencier l'invention par rapport à de l'état de la technique antérieur. Cette sélection comprend au moins une caractéristique de préférence fonctionnelle sans détails structurels, ou avec seulement une partie des détails structurels si cette partie est uniquement suffisante pour conférer un avantage technique ou pour différencier l'invention par rapport à l'état de la technique antérieure.

Sur les figures les éléments communs à plusieurs figures conservent la même référence.

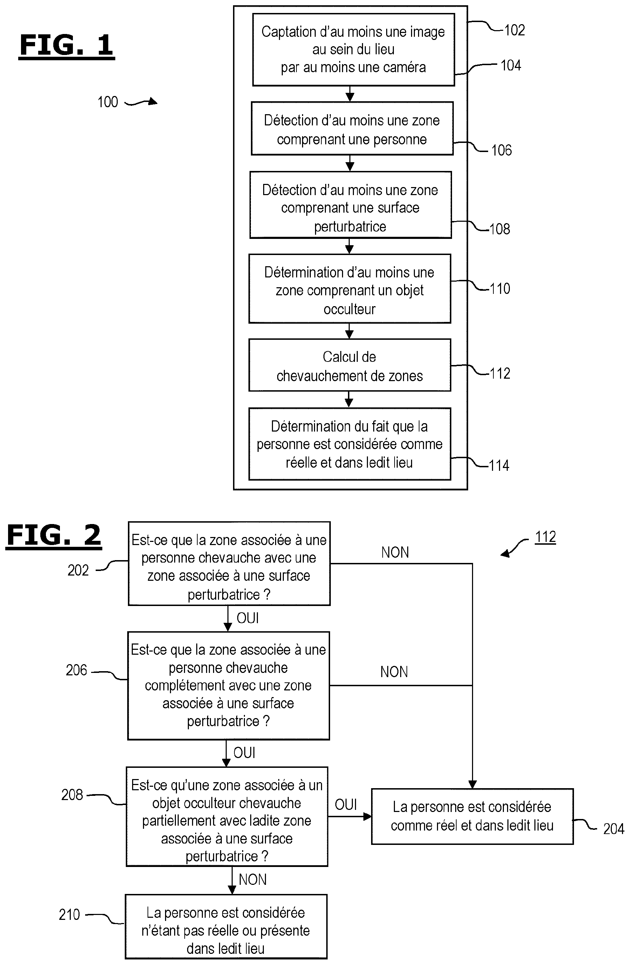

La FIGURE 1 est une représentation schématique d'un exemple de réalisation non limitatif d'un procédé selon l'invention.

Le procédé 100 illustré en FIGURE 1 est un procédé de détection de personne dans un lieu comprenant au moins une surface, dite perturbatrice, susceptible de fausser ladite détection et causer un faux-positif lors de ladite détection. Une surface perturbatrice peut par exemple être une surface translucide ou transparente telle qu'une fenêtre ou une porte, ou une surface publicitaire, tel qu'un écran ou une affiche.

Le procédé 100 de détection de personne(s) comprend au moins une itération d'une phase 102, dite de détection.

La phase 102 de détection comprend une étape 104 de captation d'une image au sein dudit lieu par au moins une caméra.

La phase 102 de détection comprend en outre, après l'étape 104 de captation :
- une étape 106 de détection dans ladite image d'au moins une zone comprenant une personne, par exemple en utilisant une unité d'analyse et/ou un réseau neuronal préalablement entrainé, prenant en entrée l'image captée au sein dudit lieu et fournissant en sortie une donnée identifiant au moins une zone de ladite image dans laquelle une personne a été détectée ou une donnée indiquant qu'aucune personne n'a été détectée,
- une étape 108 de détection dans ladite image d'au moins une zone comprenant une surface perturbatrice, par exemple en utilisant une unité d'analyse et/ou un réseau neuronal préalablement entrainé, prenant en entrée l'image captée au sein dudit lieu et fournissant en sortie une donnée identifiant au moins une zone de ladite image dans laquelle une surface perturbatrice a été détectée ou une donnée indiquant qu'aucune surface perturbatrice n'a été détectée, et
- une étape 110, optionnelle, de détection dans ladite image d'au moins une zone comprenant un objet occulteur, par exemple en utilisant une unité d'analyse et/ou un réseau neuronal préalablement entrainé, prenant en entrée l'image captée au sein dudit lieu et fournissant en sortie une donnée identifiant au moins une zone de ladite image dans laquelle un objet occulteur a été détecté ou une donnée indiquant qu'aucun objet occulteur n'a été détecté.

Dans le procédé 100 illustré en FIGURE 1, les étapes 106, 108 et 110 de détection sont réalisées successivement. Alternativement, elles peuvent être réalisées dans un autre ordre ou être réalisées simultanément.

La phase 102 de détection comprend en outre, après les étapes 106, 108 et 110 de détection, une étape 112, de calcul de chevauchement de zone. Lors de cette étape 112, il est calculé pour au moins une zone associée à une personne, de préférence pour chaque zone associée à une personne, si cette zone chevauche partiellement, complètement ou ne chevauche pas avec au moins une zone associée à une surface perturbatrice, de préférence pour chaque zone associée une surface perturbatrice. Optionnellement, il peut en outre être calculé lors de cette étape 112 si une zone associée à un objet occulteur chevauche partiellement, complètement ou ne chevauche pas avec chacune des zones associées à une surface perturbatrice.

A titre d'exemple nullement limitatif, chaque zone peut être définie par les coordonnées, selon un axe x et un axe y, de chacun des pixels qu'elle comprend de sorte qu'un éventuel chevauchement de deux zones peut être calculé par comparaison des coordonnées de chacun des pixels que les zones contiennent.

La phase de détection comprend en outre, après l'étape 112 de calcul de chevauchement de zone, pour au moins une zone associée à une personne, une étape 114, dite de détermination, pour déterminer si ladite personne est une personne réelle se trouvant dans ledit lieu, au moins en fonction d'un chevauchement de ladite zone associée à ladite personne avec au moins une zone associée à une surface perturbatrice.

Selon une variante de réalisation préférée, l'étape 114 de détermination est répétée pour chaque zone détectée associée à une personne.

Un exemple de mise en œuvre de cette étape 114 est décrit plus en détails ci-après en relation avec la FIGURE 2.

La FIGURE 2 est une représentation schématique d'un exemple de réalisation non limitatif d'un arbre de décision utilisé lors d'une étape pour déterminer si la personne est considérée comme réelle et dans ledit lieu d'un procédé selon l'invention.

L'arbre de décision 200 illustré en FIGURE 2 est un exemple structuré de conditions vérifiées successivement lors de l'étape 114 pour déterminer si une personne est une personne réelle se trouvant dans ledit lieu.

Ainsi, dans l'exemple non limitatif illustré en FIGURE 1, il est premièrement vérifié lors d'une étape 202 si la zone associée à une personne chevauche avec au moins une zone associée à une surface perturbatrice.

Dans le cas où ladite zone associée à une personne ne chevauche avec aucune zone associée à une surface perturbatrice (sortie NON de l'étape 202), la personne est directement considérée comme réelle et présente dans ledit lieu, étape 204.

Lorsque la zone associée à une personne chevauche avec au moins une zone associée à une surface perturbatrice (sortie NON de l'étape 202), il est ensuite vérifié lors d'une étape 206 si ladite zone associée à une personne chevauche complètement avec au moins une zone associée à une surface perturbatrice.

Dans le cas où ladite zone associée à une personne ne chevauche complétement avec aucune zone associée à une surface perturbatrice (sortie NON de l'étape 206), la personne est considérée comme réelle et présente dans ledit lieu, étape 204.

Lorsque la zone associée à une personne chevauche complétement avec au moins une zone associée à une surface perturbatrice (sortie OUI de l'étape 206), il est ensuite vérifié lors d'une étape 208 si une zone associée à un objet occulteur chevauche partiellement avec ladite zone associée à une surface perturbatrice.

Dans le cas où ladite zone associée à une surface perturbatrice chevauche partiellement avec une zone associée à un objet occulteur (sortie OUI de l'étape 208), la personne est considérée comme réelle et présente dans ledit lieu, étape 204.

Par contre, si aucune zone associée à un objet occulteur ne chevauche partiellement (sortie NON de l'étape 208) la personne est considérée comme n'étant pas réelle ou présente dans ledit lieu, étape 210.

Il apparaitra évident que bien qu'optionnelle, une étape de détection 110 d'au moins une zone comprenant un objet occulteur doit être réalisée par un procédé selon l'invention pour pouvoir vérifier la condition de l'étape 208.

Ainsi, dans une variante de réalisation où aucune étape de détection 110 d'au moins une zone comprenant un objet occulteur n'a été réalisée par le procédé, une personne peut directement être considérée comme n'étant pas réelle ou présente dans ledit lieu lorsque la zone associée à ladite personne chevauche complétement avec au moins une zone associée à une surface perturbatrice.

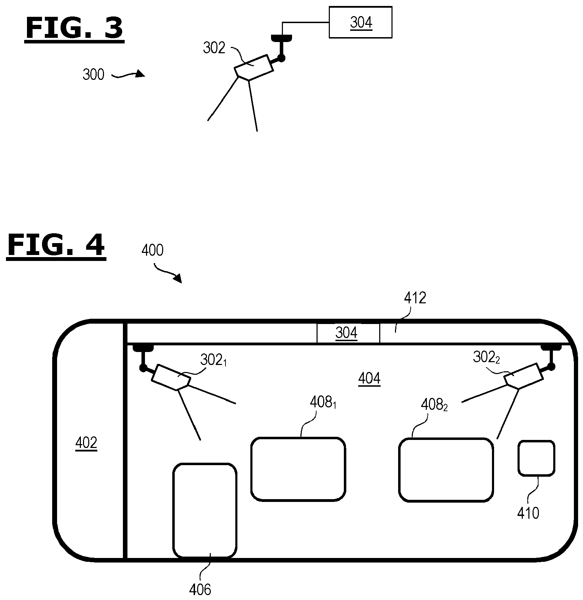

La FIGURE 3 est une représentation schématique d'un exemple de réalisation non limitatif d'un système selon l'invention.

Le système 300 de détection de personne est prévu pour pouvoir mettre en œuvre le procédé 100 décrit plus haut et de manière générale tout procédé selon l'invention.

Le système 300 de détection de personne, dans un lieu comprenant au moins une surface perturbatrice, comprend :
- une caméra 302, tel qu'un appareil photo, une caméra de vidéosurveillance, une webcam ou plus généralement tout moyen de captation visuel, pour capter au moins une image au sein dudit lieu, et
- une unité d'analyse 304, tel que par exemple un ordinateur, un serveur, un processeur ou plus généralement un moyen de calcul, configurée pour :
   - analyser au moins une image captée par ladite caméra pour détecter dans ladite image au moins une zone comprenant une personne et au moins une zone comprenant une surface perturbatrice
   - déterminer, pour chaque zone associée à une personne, si ladite personne est une personne réelle se trouvant au sein dudit lieu en fonction d'un chevauchement de ladite zone associée à ladite personne avec au moins une zone associée à une surface perturbatrice.

La FIGURE 4 est une représentation schématique d'un exemple de réalisation non limitatif d'un véhicule selon l'invention équipé d'un système selon l'invention.

Le véhicule de transport en commun 400 illustré très schématiquement en FIGURE 4 est un véhicule ferroviaire, ou un véhicule de route.

Le véhicule 400 comprend une zone, dite zone conducteur 402, réservée au conducteur et une zone, dite zone passager 404, dans laquelle les passagers sont libres de circuler.

Dans l'exemple illustré la zone passager 404 comprend une pluralité de surfaces perturbatrices sous la forme :
- d'une porte vitrée 406,
- de deux fenêtres 408₁ et 408₂, et
- d'une surface publicitaire 410.

Le véhicule 400 est en outre équipé d'un système de détection selon l'invention comprenant :
- deux caméras 302₁ et 302₂ pour capter au moins une image au sein de la zone passager 404, chacune disposée à une différente extrémité de la zone passager 404 et fixée à un plafond 412 de ladite zone passager 404, et
- une unité d'analyse 304 disposée dans le plafond 412 de ladite zone passager 404 et prévue pour analyser au moins une image captée par lesdites caméras 302₁ et 302₂ pour déterminer la présence ou non d'une personne dans ladite image.

Ainsi, la partie de l'habitacle du véhicule 400 correspondant à la zone passager 404 est le lieu pour lequel une détection de personne est possible.

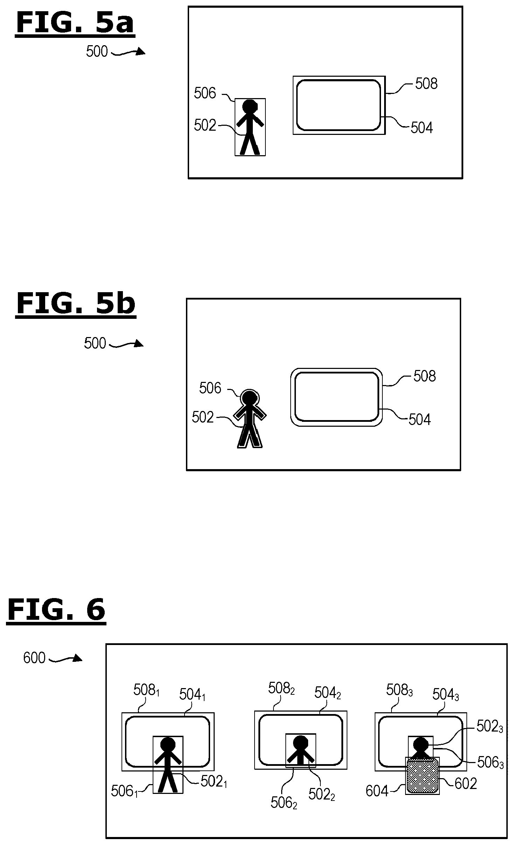

La FIGURE 5a et la FIGURE 5b sont des représentations schématiques d'exemples non limitatifs de zones détectées dans une image captée au sein d'un lieu lors de la mise en œuvre d'un procédé selon l'invention.

L'image 500 captée au sein d'un lieu comprend une personne 502 et une fenêtre 504 de forme rectangulaire à coins arrondis.

Le procédé selon l'invention permet, lors d'une étape de détection d'une zone comprenant une personne, de définir dans ladite image 500 une zone 506 associée à ladite personne 502.

De plus, le procédé selon l'invention permet, lors d'une étape de détection d'une zone comprenant une surface perturbatrice, de définir dans ladite image 500 une zone 508 associée à ladite fenêtre 504.

La zones 506 associée à une personne ne chevauche pas avec la zone 508 associée à une surface perturbatrice, par conséquent il est possible pour une unité d'analyse de déterminer que ladite personne 502 est réelle et présente au sein du lieu dans lequel l'image a été captée.

En FIGURE 5a, la zone 506 associée à ladite personne 502 et la zone 508 associée à la fenêtre 504 sont définies par des boites rectangulaires.

En FIGURE 5b, la zone 506 associée à ladite personne 502 et la zone 508 associée à la fenêtre 504 sont définies, chacune, par le contour de l'élément auquel elle est associée. Ainsi, les zones 504 et 508 de la FIGURE 5b définissent de manière plus précise que les zones 504 et 508 de la FIGURE 5a la partie de l'image comprenant l'élément auquel elles sont associées.

La FIGURE 6 est une autre représentation schématique d'un exemple non limitatif de zones détectées lors de la mise en œuvre d'un procédé selon l'invention dans une image captée au sein d'un lieu.

L'image 600 captée au sein d'un lieu comprend :
- une première personne 502₁, présente dans le lieu et située devant une première fenêtre 504₁ ;
- une deuxième personne 502₂, hors du lieu et située derrière une deuxième fenêtre 504₂ ; et
- une troisième personne 502₃, présente dans le lieu et située devant une troisième fenêtre 504₃ et derrière une valise 602.

Ainsi, lors de l'analyse de ladite image :
- trois zones 506₁-506₃ associées respectivement à chacune des trois personnes 502₁-502₃ peuvent être définies,
- trois zones 508₁-508₃ associées respectivement à chacune des trois fenêtres 504₁-504₃ peuvent être définies, et
- une zone 604 associée à l'objet occulteur qu'est la valise 602 peut être définie.

Pour déterminer si la première personne 502₁ est réelle et présente dans ledit lieu, il est possible d'identifier que la zone 506₁ associée à ladite première personne 502₁, chevauche partiellement avec la zone 508₁ associée à la première fenêtre 504₁. Ainsi, la mise en œuvre d'un procédé selon l'invention est capable de déterminer que la première personne 502₂ est présente est réelle et présente au sein dudit lieu.

Pour déterminer si la deuxième personne 502₂ est réelle et présente dans ledit lieu, il est possible d'identifier que la zone 506₂ associée à ladite deuxième personne 502₂, chevauche complétement avec la zone 508₂ associée à la deuxième fenêtre 504₂. Ainsi, la mise en œuvre d'un procédé selon l'invention est capable de déterminer que la deuxième personne 502₂ n'est pas considérée comme réelle ou présente au sein dudit lieu.

Pour déterminer si la troisième personne 502₃ est réelle et présente dans ledit lieu, il est possible d'identifier que la zone 506₃ associée à ladite troisième personne 502₂, chevauche complétement avec la zone 508₃ associée à la troisième fenêtre 504₃. De plus, il est possible d'identifier que la zone 604 associée à un objet occulteur qu'est la valise 602, chevauche partiellement avec la zone 508₃ associée à la troisième fenêtre 504₃. Ainsi, la mise en œuvre d'un procédé selon l'invention est capable de déterminer que la troisième personne 502₂ est réelle et présente au sein dudit lieu, bien que partiellement occultée par une valise.

Bien entendu, l'invention n'est pas limitée aux exemples détaillés ci-dessus.

## Revendications

1. Procédé (100) de détection de personne(s) (502;502₁;502₂;502₃) dans un lieu (404) comprenant au moins une surface (406,408,410;508;508₁;508₂;508₃), dite perturbatrice, susceptible de fausser ladite détection et causer un faux-positif lors de ladite détection, ledit procédé (100) comprenant au moins une itération d'une phase (102), dite de détection, comprenant les étapes suivantes :
- captation (104) d'une image au sein dudit lieu (404) par au moins une caméra (302) ;
- détection (106,108) au sein de ladite image (500;600) captée :
• d'au moins une zone (506;506₁,506₂,506₃) comprenant une personne (502;502₁,502₂,502₃), et
• d'au moins une zone (508;508₁,508₂,508₃) comprenant une surface perturbatrice (504;504₁,504₂,504₃) ;
**caractérisé en ce que** ladite phase de détection (102) comprend en outre, pour au moins une zone associée à une personne (502;502₁,502₂,502₃), une étape (114) pour déterminer si ladite personne est une personne réelle se trouvant dans ledit lieu (404) ou à l'extérieur dudit lieu, en fonction d'un chevauchement de ladite zone (506;506₁,506₂,506₃) associée à ladite personne (502;502₁,502₂,502₃) avec au moins une zone (508;508₁,508₂,508₃) associée à une surface perturbatrice (504;504₁,504₂,504₃).

2. Procédé (100) selon la revendication précédente, **caractérisé en ce qu'**une personne (502;502₁) est considérée comme une personne réelle se trouvant dans ledit lieu, lorsque la zone (506;506₁) associée à ladite personne (502;502₁) ne chevauche pas complètement avec aucune zone (508;508₁,508₂,508₃) associée à une surface perturbatrice (504;504₁,504₂,504₃).

3. Procédé (100) selon l'une quelconque des revendications précédentes, **caractérisé en ce que** la phase de détection (102) comprend en outre une étape de détection (110) d'au moins une zone (604) comprenant un objet occulteur (602) dans ladite au moins une image captée (600), et **en ce qu'**une personne (502₃) est déterminée comme se trouvant dans ledit lieu, lorsque :
- la zone (506₃) associée à ladite personne (502₃) chevauche complètement avec une zone (508₃) associée à une surface perturbatrice (504₃) ; et
- une zone (604) associée à un objet occulteur (602) chevauche partiellement avec ladite zone (508₃) associée à une surface perturbatrice (504₃).

4. Procédé (100) selon l'une quelconque des revendications précédentes, **caractérisé en ce qu'**au moins une desdites zones (506,508;506₁,506₂,506₃,508₁,508₂,508₃,604) détectées est définie par une boite rectangulaire.

5. Procédé (100) selon l'une quelconque des revendications précédentes, **caractérisé en ce qu'**au moins une desdites zones (506,508) détectées est définie par le contour de l'élément (502,504) auquel elle est associée.

6. Procédé (100) selon l'une quelconque des revendications précédentes, **caractérisé en ce qu'**au moins une étape de détection de zone (106,108,110) est mise en œuvre par un réseau neuronal préalablement entrainé pour ladite détection, en particulier à l'aide d'images captées dans ledit lieu (404).

7. Système de détection de personne(s) (300) dans un lieu (404) comprenant au moins une surface (406,408,410;508;508₁,508₂,508₃), dite perturbatrice, susceptible de fausser ladite détection et causer un faux-positif lors de ladite détection, ledit système (300) comprenant :
- au moins une caméra (302) pour capter au moins une image (500;600) au sein dudit lieu (404) ;
- au moins une unité d'analyse (304) configurée pour analyser au moins une image (500;600) captée par ladite caméra (302) pour détecter dans ladite image (500;600) :
• au moins une zone (506;506₁,506₂,506₃) comprenant une personne (502;502₁,502₂,502₃),
• au moins une zone (508;508₁,508₂,508₃) comprenant une surface perturbatrice (504;504₁,504₂,504₃) ; et
**caractérisé en ce que** ladite unité d'analyse (304) est configurée pour déterminer, pour chaque zone (506;506₁,506₂,506₃) associée à une personne (502;502₁,502₂,502₃), si ladite personne (502;502₁,502₂,502₃) est une personne réelle se trouvant au sein dudit lieu (404) en fonction d'un chevauchement de ladite zone (506;506₁,506₂,506₃) associée à ladite personne (502;502₁,502₂,502₃) avec au moins une zone (508;508₁,508₂,508₃) associée à une surface perturbatrice (504;504₁,504₂,504₃).

8. Système (300) selon la revendication précédente, **caractérisé en ce qu'**au moins une unité d'analyse (304) comprend un réseau neuronal préalablement entrainé pour la détection d'au moins une desdites zones (506,508;506₁,506₂,506₃,508₁,508₂,508₃), en particulier à l'aide d'images captées dans ledit lieu (404).

9. Véhicule (400) de transport en commun, en particulier véhicule ferroviaire, équipé d'un système (300) selon l'une quelconque des revendications 7 ou 8, pour la détection de personne(s) dans une zone passager (404) ou un habitacle dudit véhicule (400).

10. Véhicule (400) selon la revendication précédente, **caractérisée en ce qu'**il est :
- un wagon, équipé d'un système selon l'une quelconque des revendications 7 ou 8 pour la détection de personne à l'intérieur dudit le wagon,
- une locomotive, équipée d'un système selon l'une quelconque des revendications 7 ou 8 pour la détection de personne à l'intérieur d'une zone conducteur,
- un train, ou
- un tramway.
